# EUROPÄISCHE PATENTSCHRIFT

(11) **EP 1 019 799 B1**
(45) Veröffentlichungstag und Bekanntmachung des Hinweises auf die Patenterteilung: **28.08.2002**
(21) Anmeldenummer: 98958176.4
(22) Anmeldetag: 29.09.1998
(51) Int. Cl.: G06F 1/26, G06F 1/32

(54) **STROMVERSORGUNGSEINHEIT FÜR RECHNERSYSTEME**
POWER SUPPLY UNIT FOR COMPUTER SYSTEMS
UNITE D'ALIMENTATION ELECTRIQUE POUR SYSTEMES INFORMATIQUES

(30) Priorität: 30.09.1997 DE 19743282
(43) Veröffentlichungstag der Anmeldung: 19.07.2000
(73) Patentinhaber: Fujitsu Siemens Computers GmbH, 81739 München (DE)
(72) Erfinder: STERZIK, Willi, D-86169 Augsburg (DE); SCHWEIGER, Andreas, D-86153 Augsburg (DE)
(74) Vertreter: Epping, Wilhelm, Dipl.-Ing.
(86) Internationale Anmeldenummer: DE9802879
(87) Internationale Veröffentlichungsnummer: WO99017185

(56) Entgegenhaltungen:
- EP-A- 0 616 281
- GB-A- 2 238 675
- US-A- 5 640 176
- BASSAK G: "BRAINY, BRAWNY BATTERIES" BYTE, Bd. 20, Nr. 6, Juni 1995, Seite 131/132, 136, 138, 140 XP000509333

## Beschreibung

Die Erfindung betrifft eine Stromversorgungseinheit für Rechnersysteme gemäß dem Oberbegriff des Anspruchs 1.

Moderne Rechnersysteme bieten dem Nutzer umfangreiche Möglichkeiten der Konfigurierung. Das heißt, der Ausbau eines Grundsystems kann sich, vor allem bezüglich des Leistungsbedarfs der Stromversorgung, erheblich vom Maximalausbau unterscheiden. Auf der anderen Seite unterstützen die in den modernen Rechnersystemen verwendeten Chipsätze immer mehr sogenannte POWER MANAGEMENT-Funktionen, Funktionen, bei denen sich immer mehr Komponenten selbst abschalten bzw. bei denen immer mehr Komponenten durch das Betriebssystem des Rechnersystems abgeschaltet werden, wenn sie nicht benötigt werden. Das Betriebssystem des Rechnersystems ist diejenige Stelle innerhalb des Systems, die über den exakten Aufbau bzw. Ausbau umfassend informiert ist. An dieser Stelle sind auch Informationen darüber hinterlegt, welche Komponenten des Systems sich in einem Energiesparzustand befinden.

Durch die steigenden Möglichkeiten, auf der einen Seite Energie zu sparen und auf der anderen Seite das Rechnersystem zu konfigurieren, werden die Anforderungen an die Stromversorgungseinheit immer größer. Einerseits muss die Stromversorgungseinheit in der Lage sein, geringe Ströme zu liefern, andererseits darf eine Maximalleistung nicht überschritten werden. Gerade bei getakteten Stromversorgungseinheiten für Rechnersysteme ist prinzipbedingt darauf zu achten, dass ein Minimalstrom nie unterschritten wird, um die Spannungsspezifikationen der Stromversorgungseinheit einhalten zu können. Ein Erschwernis für die Einhaltung der Spezifikationen durch die Stromversorgungseinheit ist außerdem, dass größere Hersteller von Rechnersystemen stets versuchen, sowohl die Stromversorgungseinheit als auch Komponenten des Rechnersystems, beispielsweise die Mutterplatine (Motherboard), in den verschiedensten Systemen zum Einsatz zu bringen.

Um die Stromversorgungseinheit für die auf sie zukommenden Anforderungen zu rüsten, wurde bisher im Entwicklungsstadium derjenigen Produkte, in denen die Stromversorgungseinheit zum Einsatz kommen sollte, der Dynamikbereich erfasst und berücksichtigt. Dabei wurden aber nur sozusagen typische Konfigurationen gemessen und von da aus auf mögliche Maximalwerte geschlossen. Komponenten, die ein Kunde selbst einbaute, konnten nicht berücksichtigt werden. Die Folge davon war, dass die Stromversorgung in manchen Fällen entweder über- oder unterlastet war.

Aus dem Dokument EP-A-0 616 281 ist bekannt, Batteriestromversorgungseinheiten mit statischen Speichern auszustatten, damit ein zugehöriges Rechnersystem in der Lage ist, ein Batterielademanagement auszuführen

Getaktete Stromversorgungen haben aber nicht das Problem von Batterieaufladungen, sondern die Probleme, die eingangs geschildert sind.

Aufgabe der vorliegenden Erfindung ist daher, bezüglich einer getakteten Stromversorgungseinheit für Rechnersysteme geeignete Maßnahmen anzugeben, durch die, ohne im Entwicklungsstadium der getakteten Stromversorgungseinheit schon explizit alle möglichen Einsatzfälle zu kennen, die Möglichkeit besteht, entweder gleich sicherzustellen, dass die getaktete Stromversorgungseinheit nicht über- bzw. unterlastet wird, oder aber, wenn dies möglicherweise nicht ausreichend ist, auch die Möglichkeit besteht, dass eine Über- bzw. Unterlastung der getakteten Stromversorgungseinheit nach außen -hin bekannt gemacht wird, so dass dann von dieser Seite her eine Abhilfe möglich und ein solcher Zustand nur möglichst kurz gegeben ist. Insbesondere ist es Aufgabe der Erfindung, technische Maßnahmen anzugeben, durch die bei getakteten Stromversorgungseinheiten eine automatische Systemkonfigurierung auf Stromversorgungsebene möglich ist.

Gelöst wird diese Aufgabe durch eine getaktete Stromversorgungseinheit, die die Merkmale des Anspruchs 1 aufweist.

Dadurch, dass in der getakteten Stromversorgungseinheit eine datentechnische Speichereinheit mit stromversorgungseinheitspezifischen Daten vorgesehen ist, können in die stromversorgungseinheitspezifischen Daten unter anderem Informationen eingebaut werden, die zumindest dem Rechnersystem, das eine datentechnische Verarbeitungsanlage ist und mit datentechnisch gespeicherten Informationen arbeiten kann, Aufschluss über die Leistungsfähigkeit der Stromversorgungseinheit geben. Ist das Rechnersystem in der Weise ausgelegt, dass das zugehörige Betriebssystem den tatsächlichen Stromverbrauch des Systems erfasst und die Werte mit den Informationen aus der datentechnischen Speichereinheit der Stromversorgungseinheit vergleicht, besteht die Möglichkeit, wenn das Betriebssystem weiter in der entsprechenden Weise ausgelegt ist, dass das Betriebssystem in einer passenden Weise reagiert. In einer entsprechenden Weise ist das Betriebssystem ausgelegt, wenn es an Hand der installierten Komponenten, die sich alle beim Betriebssystem identifizieren müssen, wenigstens ungefähr den Maximal- und Minimalbedarf für den Strom ermitteln und mit den in der Stromversorgungseinheit hinterlegten Informationen vergleicht. In einer passenden Weise reagiert es, wenn es zum Beispiel feststellt, dass der Minimalstrom unterschritten wird, und es verhindert, dass die letzten Stufen möglicher Energiesparzustände des Systems eingeschaltet werden. Die Stromversorgungseinheit kann dann weiter in seinem spezifizierten Spannungsbereich arbeiten. Es reagiert auch in einer passenden Weise, wenn es feststellt, dass der Maximalstrom überschritten wird, und es eine Meldung an den Kunden ausgibt, eine leistungsfähigere Stromversorgungseinheit einzubauen oder aber Komponenten aus dem System zu entfernen.

Ein weiterer Vorteil des Einsatzes der datentechnischen Speichereinheit ist, dass auch noch andere zur Stromversorgungseinheit interessante Informationen gespeichert und herausgelesen werden können. Zum Beispiel könnte die Sachnummer der Stromversorgungseinheit gespeichert werden, was eine Vereinfachung für den Kundendienst sein könnte. Diese könnte sogar per Fernabfrage abgeholt werden. Weiter könnten Entwicklungsstände der Stromversorgungseinheit abgespeichert werden oder sonstige Informationen, die zum Beispiel einer automatischen Systemkonfigurierung dienen.

Vorteilhafte Ausgestaltungen der Erfindung sind Gegenstand von Unteransprüchen.

Danach wird als datentechnische Speichereinheit in der Stromversorgungseinheit ein nichtflüchtiger Halbleiterspeicher verwendet, weil dieser den Vorteil hat, dass auch bei Ausfall der Stromversorgung seinen Speicherinhalt behält.

Liefert die Stromversorgungseinheit ihre Strommesswerte selbst in einer für das Rechnersystem bzw. dessen Betriebssystem lesbaren Form, führt dies zu exakteren Entscheidungen durch das Betriebssystem beim Vergleich mit den entsprechenden Informationen der in der datentechnischen Speichereinheit der Stromversorgungseinheit gespeicherten Informationen.

Liefert die Stromversorgungseinheit ihre Messwerte zusätzlich oder alternativ zum für das Rechnersystem lesbaren Form auch in einer für den Benutzer lesbaren Form, kann auch der Benutzer zur Überprüfung des Sachverhalts miteinbezogen werden.

Insgesamt bietet die Verwendung einer datentechnischen Speichereinheit in der Stromversorgungseinheit auch die Möglichkeit einer automatischen und dynamischen Systemkonfigurierung auf Stromversorgungsebene.

Nachfolgend wird ein Beispiel eines EEPROM-Inhalts allgemein aufgezeigt, wobei das EEPROM die datentechnische Speichereinheit in der Stromversorgungseinheit bildet.

### PRxx;REVuu;DATEaabb;PcccW;MINd.dA;ZUSFf

Dabei stehen xx, uu, aabb, ccc, d.d und f für Zahlenwerte. Im dargestellten Beispiel weist PR auf eine Produktnummer hin, REV auf eine Revisionsnummer, DATE auf ein Datum, P auf eine Ausgangsleistung in Watt zu einer Ausgangsspannung, MIN auf einen Minimalstrom in mA zu einer Ausgangsspannung und ZUSF auf eine Zusatzfunktion, beispielsweise auf die vom Lüfter pro einer Umdrehung gelieferten Impulse. Mehrfachangaben, beispielsweise weil mehrere Ausgangsspannungen vorhanden sind, sind möglich.

## Patentansprüche

1. Getaktete Stromversorgungseinheit für Rechnersysteme **dadurch gekennzeichnet, dass** innerhalb der getakteten Stromversorgungseinheit für Systemsteuerungen des Rechnersystems wenigstens eine stromversorgungseinheitspezifische Daten bereitstellende datentechnische Speichereinheit mindestens mit gespeicherten Daten für eine automatische Systemkonfigurierung des Rechnersystems auf Stromversorgungsebene vorgesehen ist.

2. Getaktete Stromversorgungseinheit nach Anspruch 1, **dadurch gekennzeichnet, dass** die datentechnischen Speichereinheiten durch nichtflüchtige Halbleiterspeicher gebildet sind.

3. Getaktete Stromversorgungseinheit nach Anspruch 1 oder 2, **dadurch gekennzeichnet, dass** die Stromversorgungseinheit Komponenten hat, von denen für Aussagen über die Belastung der Stromversorgungseinheit maßgebende Strommesswerte und verfügbare Zusatzfunktionen in einer für das Rechnersystem und/oder von einem Benutzer des Rechnersystems lesbaren Form übernehmbar sind.

## Claims

1. Pulsed power supply unit for computer systems **characterized in that** at least one data memory unit, which provides data specific to the power supply unit and has stored data for automatic system configuration of the computer system at the power supply level, is provided within the pulsed power supply unit for system controllers in the computer system.

2. Pulsed power supply unit according to Claim 1, **characterized in that** the data memory units are in the form of nonvolatile semiconductor memories.

3. Pulsed power supply unit according to Claim 1 or 2, **characterized in that** the power supply unit has components from which current measured values, which are important for statements relating to the load on the power supply unit, and available additional functions can be transferred in a form which is legible for the computer system and/or by a user of the computer system.

## Revendications

1. Unité d'alimentation en courant à découpage pour systèmes informatiques, **caractérisée par le fait que**, à l'intérieur de l'unité d'alimentation en courant à découpage, il est prévu pour des commandes du système d'exploitation au moins une unité de mémoire informatique mettant à disposition des données spécifiques à l'unité d'alimentation en courant au moins avec des données mémorisées en vue d'une configuration automatique du système informatique sur le plan de l'alimentation en courant.

2. Unité d'alimentation en courant à découpage selon la revendication 1, **caractérisée par le fait que** les unités de mémoire informatiques sont formées par des mémoires à semi-conducteurs non volatiles.

3. Unité d'alimentation en courant à découpage selon la revendication 1 ou 2, **caractérisée par le fait que** l'unité d'alimentation en courant a des composants desquels on peut obtenir, sous une forme lisible par le système informatique et/ou par un utilisateur du système informatique, des valeurs mesurées de courant déterminantes pour donner des informations sur la charge de l'unité d'alimentation en courant et des fonctions supplémentaires disponibles.
